# EUROPÄISCHE PATENTSCHRIFT

(11) **EP 4 327 072 B1**
(45) Veröffentlichungstag und Bekanntmachung des Hinweises auf die Patenterteilung: **13.05.2026**
(21) Anmeldenummer: 22722807.9
(22) Anmeldetag: 14.04.2022
(51) Int. Cl.: G01N 21/01, G01N 21/25, G01N 21/85

(54) **GEHÄUSE FÜR EINE MESSANORDNUNG ZUR OPTISCHEN BESTIMMUNG EINER KENNGRÖSSE EINES MEDIUMS**
HOUSING FOR A MEASURING ARRANGEMENT FOR THE OPTICAL DETERMINATION OF A PARAMETER OF A MEDIUM
BOÎTIER POUR UN AGENCEMENT DE MESURE POUR LA DÉTERMINATION OPTIQUE D'UN PARAMÈTRE D'UN MILIEU

(30) Priorität: 19.04.2021 DE 102021109748
(43) Veröffentlichungstag der Anmeldung: 28.02.2024
(73) Patentinhaber: Nova Industrial Analytics GmbH, 73569 Eschach (DE)
(72) Erfinder: MANNHARDT, Joachim, 73569 Eschach (DE)
(74) Vertreter: Raunecker, Klaus Peter
(86) Internationale Anmeldenummer: PCT/EP2022/059998
(87) Internationale Veröffentlichungsnummer: WO 2022/223425

(56) Entgegenhaltungen:
- WO-A1-96/07886
- US-A1- 2012 119 101
- US-B2- 10 753 727

## Beschreibung

Die Erfindung betrifft ein Gehäuse zur Aufnahme von Komponenten einer Messanordnung zur optischen Bestimmung einer Kenngröße eines Mediums.

In vielen Bereichen der produzierenden und weiterverarbeitenden Industrie werden optische Messverfahren eingesetzt, um Zustand oder Qualität eines Produkts oder eines Zwischenprodukts zu bewerten. Unter dem Begriff "optisches Messverfahren" soll dabei im Folgenden ein Messverfahren unter der Verwendung elektromagnetischer Strahlung verstanden werden, insbesondere elektromagnetische Strahlung in einem Spektralbereich zwischen Infrarot und Ultraviolett. "Optische Messung" beinhaltet somit insbesondere eine Messung in den Spektralbereichen Fernes Infrarot (FIR), Mittleres Infrarot (MIR), Nahes Infrarot (NIR), im sichtbaren Spektralbereich sowie im UV-Bereich.

In der chemischen und der pharmazeutischen Industrie und bei der Lebensmittelherstellung kommen optische, insbesondere spektroskopische, Analysesysteme zum Einsatz, mit deren Hilfe in einem Produktionsumfeld unter Verwendung einer Sonde oder Messzelle prozessbegleitend Messungen einer mit optischen Mitteln erfassbaren Messgröße eines Messmediums durchgeführt werden. Beispielsweise kann eine Tauchsonde verwendet werden, die in das in einem Reaktionsbehälter oder einem Rohr geführte Messmedium eintaucht. Ein von einer Strahlungsquelle ausgesandter Messstrahl wird mittels der Tauchsonde über eine Messstrecke durch das Messmedium geführt und anschließend auf einen Detektor geleitet, in dem Intensität, Spektrum etc. der durch das Messmedium beeinflussten Messstrahlung analysiert werden. Die Ergebnisse geben Aufschluss über Zustandsgrößen (z.B. Konzentration, Dichte etc.) des Messmediums. Bei dem Messmedium kann es sich insbesondere um ein Fluid, aber auch um ein Schüttgut wie beispielsweise ein Pulver oder ein Gas handeln.

Eine für solche Messungen geeignete Messanordnung umfasst eine Strahlungsquelle, einen Detektor sowie einen Controller, die gemeinsam in einem Gehäuse angeordnet sind. Soll das optische Analysesystem in einer Prozessumgebung verwendet werden, so muss das die Messanordnung umgebende Gehäuse robust ausgelegt sein, um die Messanordnung gegenüber Temperatureinflüssen, Schmutz, Staub, Erschütterungen etc. zu schützen. Eine Messanordnung mit einem solchen Gehäuse ist aus der DE 10 2012 019 433 A1 bekannt. Im Innenraum des Gehäuses ist eine Sensorvorrichtung und eine räumlich davon getrennte Elektronikvorrichtung angeordnet. Zur Temperaturstabilisierung der im Gehäuse befindlichen optischen und elektronischen Komponenten ist eine Kühlvorrichtung vorgesehen.

Eine vergleichbare Messanordnung ist aus der US-Patentschrift US 10 753 727 B2 bekannt. In der genannten Schrift ist eine tragbare Terahertz (THz)-Messvorrichtun-gen zur Schichtdickenmessung von Testobjekten, insbesondere von extrudierten Kunststoffrohren, bekannt. Derartige Systeme nutzen THz-Strahlung im Frequenzbereich von 10 GHz bis 10 THz, um durch Reflexion an Grenzflächen von Materialien mit unterschiedlichen Brechungsindizes Laufzeitmessungen durchzuführen und hieraus die Schichtdicke zu bestimmen.

Weiterhin ist aus der US-Patentanmeldung US 2012/0119101 A1 ein optischer Sensor bekannt, der eine Einweg-Durchflusszelle mit einem Zellenkörper, einem Einlassrohr und einem Auslassrohr umfasst. Diese bilden einen Durchflusskanal, der sich zwischen dem Einlassrohr und dem Auslassrohr durch den Zellenkörper erstreckt.

Eine Lichtquelle und ein Detektor sind dabei auf gegenüberliegenden Seiten des Zellenkörpers angeordnet, sodass ein optischer Strahlengang entlang einer Achse zwischen der Lichtquelle und dem Detektor durch den Zellenkörper verläuft. In der Internationalen Patentanmeldung WO 96/07886 A1 ist ein Gasanalysator zum Ausgeben eines Signals zur Konzentration eines bestimmten Gases in einer Probe offenbart. Dabei wird das die Probe in einer Küvette von Infrarotstrahlung durchstrahlt, wobei die Strahlung mittels eines Spiegels nach Passieren der Küvette durch die Küvette zurück auf einen Detektor gelenkt wird.

Um eine hohe Messgenauigkeit und Reproduzierbarkeit des optischen Analysesystems sicherzustellen, muss eine regelmäßige Validierung unter Verwendung von Standards durchgeführt werden; eine solche Validierung findet typischerweise in einem Laborumfeld mit Hilfe einer Kalibriervorrichtung statt. Ist die optische Analyseanordnung im Betrieb in einem Prozessumfeld integriert (d.h. fest mit dem Prozess verbunden), so ist eine solche Validierung mit großem Aufwand verbunden, weil das optische Analysesystem aus der Prozessumgebung entnommen und nach Abschluss der Validierung wieder lagegenau in der Prozessumgebung montiert werden muss.

Erfindungsgemäß soll ein Gehäuse für eine optische Analysevorrichtung bereitgestellt werden, das als Universal-Gehäuse für ein breites Spektrum unterschiedlicher Messanordnungen und Messumgebungen eingesetzt werden kann. Das Gehäuse soll insbesondere eine zuverlässige Befestigung unterschiedlicher, auf die jeweilige Mess- bzw. Prüfaufgabe zugeschnittener Messanordnungen sowie eine gute Temperaturstabilität gewährleisten.

Diese Aufgabe wird gelöst durch ein Gehäuse mit den Merkmalen des unabhängigen Anspruchs 1. Die Unteransprüche betreffen vorteilhafte Weiterbildungen und Varianten der Erfindung.

Die entsprechende optische Analysevorrichtung umfasst eine optische Messanordnung mit mehreren optischen, elektronischen, elektrooptischen und/oder elektromechanischen Komponenten, die gemeinsam im Innenraum eines Gehäuses angeordnet sind. In dem Gehäuse ist ein Ein-/Austrittsbereich vorgesehen, in dem elektromagnetische Strahlung aus dem Gehäuse austreten bzw. in das Gehäuse eintreten kann. Zur lagegenauen lösbaren Befestigung der optischen Analysevorrichtung an einem Einsatzort, insbesondere in einem Prozessumfeld, weist das Gehäuse weiterhin eine mechanische Schnittstelle auf. Mittels dieser mechanischen Schnittstelle kann die optische Analysevorrichtung in reproduzierbarer Weise an einem oder an unterschiedlichen Einsatzorten befestigt werden. So kann die optische Analysevorrichtung beispielsweise in einer vorgegebenen Lage und Ausrichtung an einer ausgewählten Stelle im Prozessumfeld befestigt werden, um an dieser Stelle eine Kenngröße eines Messmediums zu messen. Andererseits kann die optische Analysevorrichtung mit Hilfe dieser mechanischen Schnittstelle an einer Kalibriervorrichtung in einem Laborumfeld befestigt werden, um eine Validierung der optischen Analysevorrichtung durchzuführen. Die Befestigungsmittel ermöglichen es, das Gehäuse mit der darin enthaltenen Messanordnung dreh- und verschiebungssicher in der Prozessumgebung zu montieren. Andererseits ist diese Befestigung lösbar, so dass das Gehäuse mit der darin enthaltenen Messanordnung ohne großen Aufwand aus der Prozessumgebung entfernt und an einen anderen Einsatzort transferiert werden kann. Insbesondere kann das Gehäuse - z.B. im Zuge einer turnusmäßigen Überprüfung der Messanordnung - aus der Prozessumgebung entnommen und zu einer Kalibrierstation transferiert werden, in der z.B. mittels Standardküvetten eine Kalibrierung bzw. Validierung der Messanordnung erfolgt. Danach kann die Messanordnung wieder an den Einsatzort in der Prozessumgebung zurücktransferiert und mit Hilfe des am Gehäuse vorgesehenen Befestigungselements lagegenau montiert werden.

Die für die Lösung einer gegebenen Messaufgabe benötigten optischen, elektronischen, elektrooptischen und/oder elektromechanischen Komponenten sind vorteilhafterweise gemeinsam auf einem Komponententräger im Innenraum des Gehäuses angeordnet. Die Art, Zahl und Positionierung der auf dem Komponententräger montierten Komponenten variiert dabei je nach Mess- oder Prüfaufgabe. So sind beispielsweise zur spektrometrischen Ermittlung einer Kenngröße eines Mediums, z.B. eines in einem Behältnis enthaltenen Fluids, auf dem Komponententräger (mindestens) eine Strahlungsquelle, (mindestens) eine Detektoreinheit zur Erfassung einer Messstrahlung sowie eine Messelektronik zur Erfassung und Weiterverarbeitung der Ausgabedaten der Detektoreinheit vorgesehen. Zusätzlich können weitere Komponenten vorhanden sein.

Dadurch, dass die Komponenten der Messanordnung gemeinsam auf einem Komponententräger befestigt sind, ist eine stabile Ausrichtung der Einzelkomponenten zueinander gewährleistet. Durch die Fixierung aller Komponenten und Baugruppen auf dem Komponententräger wird weiterhin sichergestellt, dass empfindliche Baugruppen (beispielsweise eine optische Bank mit Lichtleitern) gegen unbeabsichtigte Relativbewegungen geschützt werden.

Der Komponententräger kann lösbar im Innenraum des Gehäuses angeordnet sein, so dass der Komponententräger einfach und ohne großen Aufwand aus dem Innenraum des Gehäuses entnommen werden kann. Damit ist ein schneller Austausch der optischen und elektronischen Komponenten im Reparaturfall möglich. Weiterhin besteht der Vorteil, dass das Gehäuse für unterschiedliche Messaufgaben genutzt werden kann: Soll die optische Analysevorrichtung beispielsweise von einer ersten auf eine zweite Messaufgabe umgerüstet werden, so wird der für die erste Messaufgabe konfigurierte Komponententräger aus dem Gehäuse entnommen und durch einen für die zweite Messaufgabe konfigurierten Komponententräger ersetzt.

Die auf dem Komponententräger fixierte Messanordnung ist dabei auf einen bestimmte Messaufgabe hin ausgelegt, während das Gehäuse für eine Vielzahl verschiedener Messaufgaben zum Einsatz kommen kann. Das Gehäuse ist somit ein Universalgehäuse in dem Sinne, dass bei einem Wechsel der Messaufgabe nur der entsprechende Komponententräger ausgewechselt werden muss, während das Gehäuse als solches unverändert bleibt. Durch einen Austausch des Komponententrägers kann ein Messsystem somit schnell auf eine neue Messaufgabe umgerüstet werden. Weiterhin kann ein- und dasselbe Gehäuse in unterschiedlichen Messumgebung bzw. Messstellen zum Einsatz kommen, sofern an diesen Messstellen Befestigungsmittel für die mechanische Schnittstelle des Gehäuses vorgesehen sind. Dadurch entstehen mehrere Vorteile:
Für den Hersteller von Messsystemen ergibt sich der Vorteil, dass ein- und derselbe Gehäusetyp für ein weites Spektrum von optischen Analysevorrichtungen verwendet werden kann. Es ist somit nicht mehr notwendig, für jede neue Messaufgabe ein geeignetes Gehäuse zu konstruieren und zu bauen, sondern es liegt eine Universalgehäuse vor, in das der auf den Einzelfall angepasste, mit den jeweils benötigten Komponenten bestückte, Komponententräger eingesetzt werden kann. Aufgrund der am Gehäuse vorgesehenen mechanischen Schnittstelle kann dieses Universalgehäuse weiterhin in unterschiedlichen Messumgebungen zum Einsatz kommen, indem geeignete Befestigungselemente für die jeweilige Messaufgabe vorgesehen werden.

Für den Nutzer des Messsystems ergibt sich zusätzlich der Vorteil eines Baukastensystems für optische Analysevorrichtungen mit einem Gehäuse, das mittels der mechanischen Schnittstelle an einer Vielzahl von Messstellen befestigt werden kann. So können in einer Prozessumgebung, in der an vielen Orten unterschiedliche optische Messungen durchgeführt werden müssen, entsprechend gestaltete Befestigungsbereiche festgelegt werden, an denen die optischen Analysevorrichtungen mit Hilfe der mechanischen Schnittstelle montiert werden kann. Tritt in einem der Messsysteme ein Defekt auf, so kann die defekte Analysevorrichtung schnell und ohne aufwendige Justierung aus dem Produktionsumfeld entnommen und durch eine Ersatzvorrichtung ersetzt werden. Alternativ kann ein defekter Komponententräger aus dem Gehäuse entnommen und durch einen funktionsfähigen Komponententräger ersetzt werden.

Alternativ oder zusätzlich zur Verwendung eines Komponententrägers kann auch das Gehäuse selbst eine wie oben beschriebene mechanische Codierung zur Aufnahmen und zum Tausch einzelner Komponenten aufweisen.

Ein erfindungsgemäßes Gehäuse umfasst einen Komponententräger, auf dem eine Messanordnung mit einer Mehrzahl von optischen, elektronischen, elektrooptischen und/oder elektromechanischen Komponenten befestigt werden kann. Weiterhin umfasst das Gehäuse einen Ein-/Austrittsbereich für den Ein-/Austritt optischer Strahlung und eine mechanische Schnittstelle, mit der das Gehäuse lagegenau, aber einfach und schnell lösbar, an einem Einsatzort, insbesondere an einer Außenwand eines Prozessraums oder an einer Kalibriervorrichtung, befestigt werden kann.

Erfindungsgemäß ist das Gehäuse mindestens zweiteilig ausgestaltet und umfasst eine Oberschale und eine Unterschale. Ober- und Unterschale können mittels einer lösbaren Verbindung, beispielsweise einer Schraubverbindung, miteinander verbunden werden. Zwischen der Oberschale und der Unterschale ist eine Dichtung vorgesehen, wobei die Dichtung mittels Sicherungsschrauben gegen Verlust gesichert ist.

Die Dichtung, beispielsweise ein Dichtungsring oder eine Flachdichtung stellt sicher, dass beispielsweise bei einem Einsatz in einer Prozessumgebung Staub und Verschmutzungen aus dem Prozessumfeld aus dem Inneren des Gehäuses ferngehalten werden.

Die mechanische Schnittstelle umfasst Befestigungsmittel, von denen je (mindestens) eines an dem Gehäuse und (mindestens) eines an dem Einsatzort befestigt ist. Unter dem Begriff "befestigt" soll hierbei eine beliebige kraft-, form- oder stoffschlüssige verstanden werden, so dass beispielsweise das am Gehäuse vorgesehene Befestigungsmittel verschweißt, verschraubt oder auch einstückig mit dem Gehäuse ausgebildet sein kann. Das am Gehäuse vorgesehene erste Befestigungsmittel und das am Einsatzort befestigte zweite Befestigungsmittel greifen in Einbaulage des Gehäuses am Einsatzort in einer solchen Weise ineinander, dass eine mechanisch stabile, verschiebungs- und verdrehsichere, leicht lösbare Verbindung mit eindeutiger Orientierung hergestellt ist.

Soll das Gehäuse an unterschiedlichen Einsatzorten verwendet werden, dann kann an jedem dieser Einsatzorte ein zweites Befestigungsmittel vorgesehen sein, in das das am Gehäuse vorgesehene erste Befestigungsmittel eingreift, um eine feste, lagegenaue lösbare Verbindung darzustellen. Auf diese Weise wird eine mechanische Universalschnittstelle geschaffen, die einerseits einen schnellen Wechsel von Einsatzorten des Gehäuses ermöglicht, andererseits aber auch einen schnellen Austausch unterschiedlich bestückter oder gestalteter Gehäuse am Einsatzort ermöglicht, sofern jedes dieser Gehäuse mit einem entsprechenden ersten Befestigungsmittel versehen ist.

Insbesondere kann ein- und dasselbe Gehäuse für Messaufgaben in einem Prozessumfeld und ein einer Laborumgebung verwendet werden. Dies ermöglicht eine automatisierte Validierung der im Gehäuse montierten Messanordnung, weil das Gehäuse wechselweise an der Messstelle im Prozessumfeld und an einer Validieranordnung im Laborumfeld befestigt werden kann, ohne das Gehäuse öffnen bzw. die darin enthaltene Messanordnung verändern zu müssen. Auf diese Weise entsteht ein aufgeräumtes und geordnetes optisches Analysesystem, bei dem das Gehäuse ein Universalgehäuse ist; die Bestückung des darin enthaltenen Komponententrägers kann jedoch ganz unterschiedlich sein kann, je nachdem, in welchem Spektralbereich man arbeitet.

Zur lagegenauen lösbaren Befestigung des Gehäuses an dem Einsatzort eignet sich insbesondere ein Bajonettverschluss. Ein Bajonettverschluss ist eine schnell herstellbare und lösbare Verbindung zweier zylindrischer Teile, wobei die Teile durch Ineinanderstecken und entgegengesetztes Drehen verbunden und so auch wieder getrennt werden. Auf diese Weise kann die im Gehäuse enthaltene Messanordnung schnell und lagesicher in an ihrem Einsatzort, z.B. in einem Produktionsumfeld, montiert und demontiert werden.

Vorteilhafterweise ist die mechanische Schnittstelle in einer solchen Weise gestaltet, dass der mechanische Verbindungsbereich des Gehäuses mit dem Ein-/Austrittsbereich für optische Strahlung räumlich überlappt. Der Austrittsbereich für optische Strahlung befindet sich somit in unmittelbarer Umgebung des Befestigungselements oder innerhalb des Befestigungselements, mit dem das Gehäuse in einer Prozess- oder Laborumgebung mechanisch fixiert wird. Auf diese Weise kann neben der lagegenauen mechanischen Verbindung auch eine lagegenaue optische Verbindung der im Gehäuse enthaltenen Messanordnung zu dem zu messenden Medium im Prozessraum sichergestellt werden. Der Verbindungsbereich kann so gestaltet werden, dass beim mechanischen Befestigen des Gehäuses am Einsatzort nicht nur die hochgenaue Positionierung des Gehäuses, sondern gleichzeitig auch eine optische Ankopplung der im Gehäuse montierten Messanordnung an das zu messende Medium, beispielsweise ein durch einen Prozessraum strömendes Fluid, gewährleistet ist. Wenn auf diese Weise zusammen mit der Herstellung der mechanischen Verbindung gleichzeitig auch eine hochgenaue Ausrichtung der aus dem Gehäuse aus- bzw. eintretenden Strahlung gegenüber dem zu messenden Medium am Einsatzort erfolgt, ist nach der Montage der optischen Analysevorrichtung an ihrem Einsatzort keine zusätzliche Justierung der Messoptik notwendig. Die räumliche Überdeckung des mechanischen Verbindungsbereichs mit dem optischen Ein-/Austrittsbereich vereinfacht somit die Montage und Demontage des Messsystems im Produktionsumfeld in erheblichem Maße.

Durch die räumliche Überlappung des Ein-/Austrittsbereichs für optische Strahlung mit der mechanischen Schnittstelle wird nicht nur die optische Schnittstelle in die mechanische Schnittstelle integriert, mittels derer eine lagesichere und schnell lösbare Verbindung des Gehäuses am Einsatzort hergestellt wird. Ganz allgemein kann eine Integration aller Schnittstellen (mechanisch, optisch, thermisch) in ein- und demselben Bereich erreicht werden. Dadurch kann man die optische Analysevorrichtung sowohl an einem Einsatzort in einer Prozessumgebung als auch in einer Laborumgebung zur Kalibrierung anschließen. Dabei kann eine beliebige lösbare formschlüssigen und/oder kraftschlüssigen Verbindungstechnik, beispielsweise eine Schraub-, Steck- und/oder Klemmverbindung, ausgewählt werden. Als besonders vorteilhaft hat sich eine kombinierte Schraub-/Steckverbindung in Form eines Bajonettverschlusses erwiesen.

Wie beschrieben eignet sich das erfindungsgemäße Gehäuse für einen Einsatz in einem weiten Spektrum von Mess- und Prüfumgebungen, insbesondere auch für den Einsatz in einer rauen Produktionsumgebung. Um die Messanordnung vor Umwelteinflüssen zu schützen, ist der Innenraum des Gehäuses vorteilhafterweise ein geschlossener Hohlraum, in dem der Komponententräger und die darauf zu befestigenden optischen Komponenten vollständig aufgenommen ist. Die optische Messanordnung ist somit vollständig von den Wandungen des Gehäuses umschlossen und gegenüber äußeren Verschmutzungen, Berührungen, Fremdlicht etc. abgeschirmt.

Weiterhin ist es vorteilhaft, wenn das Gehäuse mit einer Kühl- und/oder Heizvorrichtung zur Temperierung der im Innenraum des Gehäuses enthaltenen Messanordnung versehen ist. Viele optische und elektronische Komponenten benötigen zwingend eine konstante Temperatur, um stabil arbeiten zu können. Herrschen in dem Prozessumfeld, in dem die optische Analysevorrichtung eingesetzt werden soll, sehr hohe oder sehr niedrige Temperaturen und/oder Temperaturschwankungen, so müssen geeignete Maßnahmen getroffen werden, um die von außen auf das Gehäuse Heiz- bzw. Kühlströme effektiv abzuführen und so für eine gleichbleibende Temperatur im Gehäuseinnenraum zu sorgen. Weiterhin muss Wärme, die von den optischen und elektronischen Komponenten im Innenraum erzeugt wird, in geeigneter Weise abgeführt werden.

Die Kühl- bzw. Heizvorrichtung befindet sich zweckmäßigerweise direkt unterhalb des Komponententrägers, beispielsweise in einem zwischen dem Komponententräger und einer Bodenplatte des Gehäuses gebildeten Hohlraum im Gehäuseinnenraum. Dies ermöglicht eine effektive Temperierung des Gehäuseinnenraums über eine große Fläche hinweg. Zur Temperierung sind Kühlleitungen vorgesehen, die von einem extern zugeführten Kühlmedium durchströmt werden. Die Dichte und Anordnung der Kühlleitungen kann dann entsprechend der erwarteten externen thermischen Belastung bzw. der Temperaturverteilung im Gehäuseinnenraum angepasst bzw. variiert werden. Mittels einer solchen Kühlvorrichtung können somit beim Einsatz der optischen Analysevorrichtung schädliche Temperatureinflüsse aus dem Innenraum des Gehäuses ferngehalten oder zumindest kontrolliert und eine Temperierung der elektronischen Komponenten erreicht werden.

Dabei kann in einer vorteilhaften Variante der Erfindung die Kühl- bzw. Heizvorrichtung derart ausgeführt sein, dass ein Kühlmedium, insbesondere eine Kühlflüssigkeit zunächst mindestens einer der Komponenten, insbesondere eine elektronische Komponente wie beispielsweise einen Prozessor und nachfolgend den Ein-/Austrittsbereich für den Ein-/Austritt optischer Strahlung erreicht.

Um eine Bestückung bzw. Konfigurationsänderung des Komponententrägers und einen Austausch der darauf befestigten optischen und elektronischen Komponenten zu erleichtern, umfasst der Komponententräger vorteilhafterweise eine zeichnerische oder mechanische Codierung, die eine eineindeutige Platzierung und Ausrichtung der Komponenten an definierten Orten auf dem Komponententräger gewährleistet. Dies erhöht die Servicefreundlichkeit, da beim Auswechseln einer bestimmten Komponente hochgenau vorgegeben ist, wo und in welcher Ausrichtung die Ersatzkomponente positioniert werden soll. Jede einzelne (optische und elektronische) Komponente hat ihren festen Stammplatz, so dass ein Vertauschen oder eine falsche Montage ausgeschlossen werden. Dies erhöht die Servicefreundlichkeit und reduziert den Aufwand bei der Bestückung des Komponententrägers für eine vorgegebene Messaufgabe.

Ein entsprechendes Gesamtsystem umfasst eine optische Analysevorrichtung, mit Hilfe derer eine Kenngröße eines Mediums in einem Prozessumfeld bestimmt werden kann, und eine Kalibriervorrichtung zur Validierung/Kalibrierung dieser optischen Analysevorrichtung. Zwischen der optischen Analysevorrichtung und der Kalibriervorrichtung ist eine mechanische Schnittstelle vorgesehen, die der mechanischen Schnittstelle zwischen optischer Analysevorrichtung im Prozessumfeld entspricht. Die optische Analysevorrichtung kann somit mit Hilfe ein- und derselben mechanischen Schnittstelle wahlweise entweder an einer Messstelle im Produktionsumfeld oder an der Kalibriervorrichtung verbunden werden. Wenn der Ein-/Austrittsbereich für Strahlung mit der mechanischen Schnittstelle überlappt, kann im gleichen Zug auch die optische Verbindung der optischen Analysevorrichtung zum Ort der Messung im Prozessumfeld oder zur Kalibriervorrichtung hergestellt werden. Da die mechanische Schnittstelle eine einfach und schnell lösbare, lagegenaue Verbindung der Bauteile gestattet, ist es somit auf einfache Weise möglich, das optische Analysesystem von der Messstelle zu entnehmen, anhand der Kalibriervorrichtung zu validieren und gleich wieder an der Messstelle zu befestigen. Im Unterschied zu herkömmlichen Messsituationen, bei denen das optische Messsystem fest im Produktionsumfeld installiert ist, ist es mit Hilfe der Erfindung somit möglich, ein in einer Prozessumgebung eingesetztes optisches Messsystem auf einfache Art und Weise zu validieren. Das ermöglicht somit eine einfache, regelmäßige Validierung eines im Prozessumfeld befindlichen optischen Messsystems mit rückführbaren, in der Kalibriervorrichtung enthaltenen Standards.

Nachfolgend werden Ausführungsbeispiele und Varianten der Erfindung anhand der Zeichnung näher erläutert. Es zeigen
- Figur 1: eine perspektivische Ansicht einer erfindungsgemäßen optischen Analysevorrichtung mit einer Messanordnung, die in einem Gehäuse aufgenommen ist;
- Figur 2: eine schematische Schnittansicht des Gehäuses der Figur 1;
- Figur 3: eine perspektivische Ansicht einer mit Komponenten bestückten Unterschale des Gehäuses der Figur 1;
- Figur 4: eine perspektivische Ansicht einer mit anderen Komponenten bestückten Unterschale des Gehäuses der Figur 1;
- Figur 5a: eine perspektivische Ansicht der optischen Analysevorrichtung der Figur 1 in Zusammenbaulage mit einer Tauchsonde für einen Einsatz in einem Prozessumfeld;
- Figur 5b: eine perspektivische Explosionsdarstellung eines Zusammenbaus der optischen Analysevorrichtung der Figur 1 mit einem Anschlussbauteil;
- Figur 6a: eine perspektivische Detailansicht einer mechanischen Schnittstelle mit Befestigungselement und Gegenelement zur Herstellung eines Bajonettverschlusses;
- Figur 6b: eine perspektivische Detailansicht des Befestigungselement und Gegenelements der Figur 6a;
- Figur 7a: eine perspektivische Ansicht der optischen Analysevorrichtung der Figur 1 in Zusammenbaulage mit einer Kalibriervorrichtung;
- Figur 7b: eine schematische Darstellung eines in der Kalibriervorrichtung der Figur 7a zum Einsatz kommenden, mit Proben bestückten Drehtellers;
- Figur 8: ein Detail zum Dichtungskonzept der erfindungsgemäßen Analysevorrichtung;
- Figur 9: ein weiteres Detail zum Dichtungskonzept;
- Figur 10: eine Variante zum Dichtungskonzept.

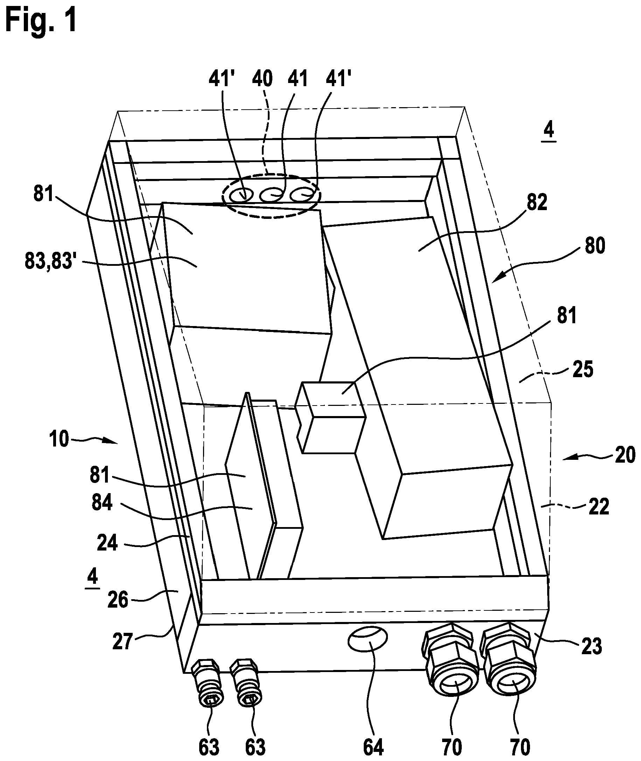

Figur 1 zeigt eine perspektivische Ansicht einer optischen Analysevorrichtung 10 zur Bestimmung mindestens einer Kenngröße eines Messmediums mit Hilfe eines optischen Messverfahrens. Die optische Analysevorrichtung 10 umfasst ein Gehäuse 20, in dem eine Messanordnung 80 mit einer Mehrzahl von Komponenten 81 aufgenommen ist. Die Messanordnung 80 umfasst insbesondere eine Strahlungsquelle 82, einen Detektor 83 (im vorliegenden Fall ein Spektrometer 83') sowie einen Controller 84 und kann auch weitere optische, elektronische, elektrooptische und/oder elektromechanische Komponenten 81 enthalten. Der Controller 84 dient u.a. der Koordination des zeitlichen Ablaufs zwischen Spektrometer 83' und Strahlungsquelle 82, insbesondere bei Verwendung einer Blitzlampe oder im gepulsten Betrieb. Weiterhin kann mittels des Controllers 84 ein (in den Figuren nicht gezeigte) Shutter geöffnet bzw. geschlossen werden oder eine interne Autokalibrierung durchgeführt werden. Der Controller 84 kann auch weitere Steuerungs- und Auswertefunktionen übernehmen, z.B. die Berechnung eines Spektrums oder eines Prozessparameters aus den Signalen des Spektrometers 83' und die Weiterleitung von Messergebnissen, beispielsweise über Ethernet oder eine Prozessschnittstelle, in einen außerhalb des Gehäuses 20 befindlichen Außenraum 4.

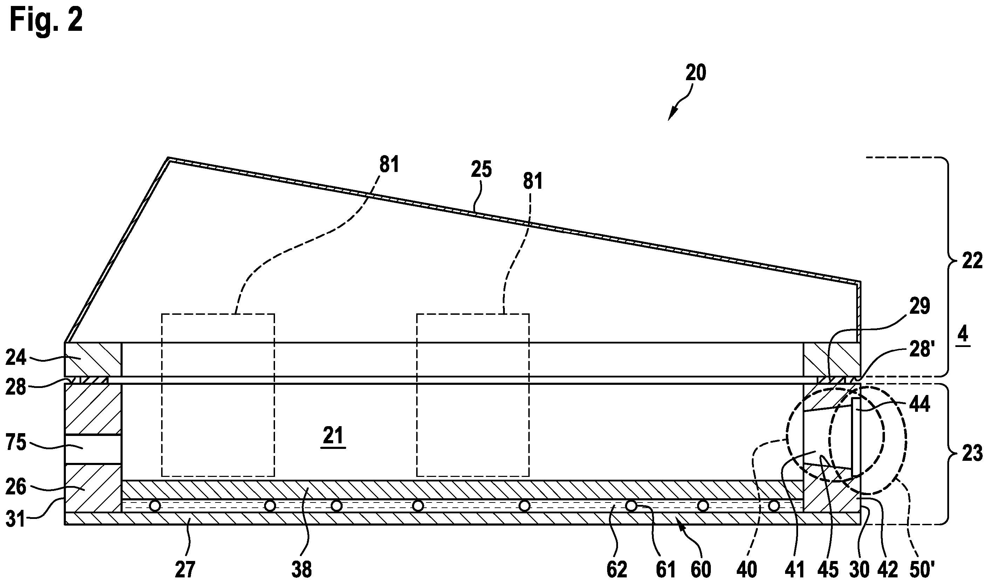

Figur 2 zeigt eine schematische Schnittansicht des Gehäuses 20 der Figur 1. Das Gehäuse 20 ist zweiteilig ausgestaltet und umfasst eine Oberschale 22 und eine Unterschale 23, die mit Hilfe einer lösbaren Verbindung, beispielsweise einer Schraubverbindung, miteinander verbunden sind. Ober- und Unterschale 22, 23 umfassen jeweils einen stabilen Rahmen 24, 26 und sind nach oben bzw. unten mit einer Haube 25 bzw. einer Bodenplatte 27 abgeschlossen. In der Darstellung der Figur 1 ist die Haube 25 transparent dargestellt, um die im Gehäuse 20 enthaltenen Komponenten 81 sichtbar zu machen. Die Unterschale 23 weist Durchgangslöcher 75 für Medien- und elektrische Leitungen, einen Ein-/Austrittsbereich 40 für Strahlung mit Durchgangsöffnungen 41, 41' sowie einen Verbindungsbereich 50' zur Fixierung des Gehäuses 20 in einem Messumfeld auf.

Das Gehäuse 20 der Figur 2 ist ein Universalgehäuse in dem Sinn, dass es für ein weites Spektrum unterschiedlicher Messaufgaben in unterschiedlichsten Prozess- und Laborumgebungen eingesetzt werden kann. Je nach Anwendung nimmt das Gehäuse 20 in seinem Innenraum 21 unterschiedliche Messanordnungen 80 auf und ist mit geeigneten optischen und mechanischen Zusatzelementen versehen, die eine Ein-/Auskopplung der Messstrahlung aus dem Gehäuse 20 und eine lagegenaue lösbare Befestigung des Gehäuses in der Messumgebung gestatten.

Die Rahmen 24, 26 des Gehäuses 20 haben eine näherungsweise rechteckige Form und bestehen aus einem Metall, beispielsweise Edelstahl. Die Bodenplatte 27 ist näherungsweise eben und ist mittels einer geeigneten Verbindungstechnik, beispielsweise mittels Schrauben, Kleben, Löten oder Schweißen, an den Rahmen 26 der Unterschale 23 angebunden. Die Haube 25 der Oberschale 22 ist ein Tiefziehblech aus Edelstahl und ist mit dem Rahmen 24 der Oberschale 22 verklebt, verschweißt, verlötet oder auf andere Weise verbunden. Die beiden Gehäuseschalen 22, 23 schließen in der in Figur 2 gezeigten Zusammenbaulage einen geschlossenen Hohlraum 21 ein, in dem eine Messanordnung 80 vollständig aufgenommen werden kann. Die einander gegenüberliegenden Kontaktflächen 28, 28' von Oberschale 22 und Unterschale 23 sind als näherungsweise ebene Ringflächen ausgebildet, zwischen denen eine umlaufende Dichtung 29, beispielsweise ein O-Ring oder eine Flachdichtung aus Kunststoff oder Metall, angeordnet sein kann. Mittels einer solchen Dichtung 29 kann der Innenraum 21 des Gehäuses 20 hermetisch abgeriegelt werden, dies insbesondere dann vorteilhaft, wenn die Analysevorrichtung 10 in einem verschmutzten oder explosionsgefährdeten Prozessumfeld 5 eingesetzt werden soll.

Im Innenraum 21 des Gehäuses 20 befindet sich ein Komponententräger 38, auf dem die optischen und elektronischen Komponenten 81 der Messanordnung 80 befestigt werden können. Der Komponententräger 38 ist lösbar, beispielsweise über eine Schraubverbindung, am Rahmen 26 der Unterschale 23 des Gehäuses 20 befestigt. Eine solche lösbare Verbindung des Komponententrägers 38 an der Unterschale 23 ermöglicht es, den momentan im Einsatz befindlichen Komponententräger 38 durch einen anderen Komponententräger (gleicher oder unterschiedlicher Bauart) zu ersetzen, was die Flexibilität und Wartungsfreundlichkeit der optischen Analysevorrichtung 10 erhöht. Weiterhin können unterschiedlich bestückte Komponententräger 38 eingesetzt werden, so dass ein- und dasselbe Gehäuse 20 zur Aufnahme unterschiedlicher Messanordnungen 80 genutzt werden kann.

Der Komponententräger 38 nimmt sämtliche optischen, optoelektronischen, optomechanischen und elektronischen Komponenten 81 der Messanordnung 80 auf, so dass alle für eine vorgegebene Messaufgabe benötigte Einzelkomponenten 81 gemeinsam und in einer festen Relativlage auf dem Komponententräger 38 fixiert werden können. Das den Komponententräger 38 umgebende Gehäuse 20 mit dem robusten Rahmen 26 schützt den Komponententräger 38 und die darauf befindlichen Komponenten 81 vor mechanischen Beeinträchtigungen und verleiht der Messanordnung 80 eine hohe mechanische und thermische Stabilität.

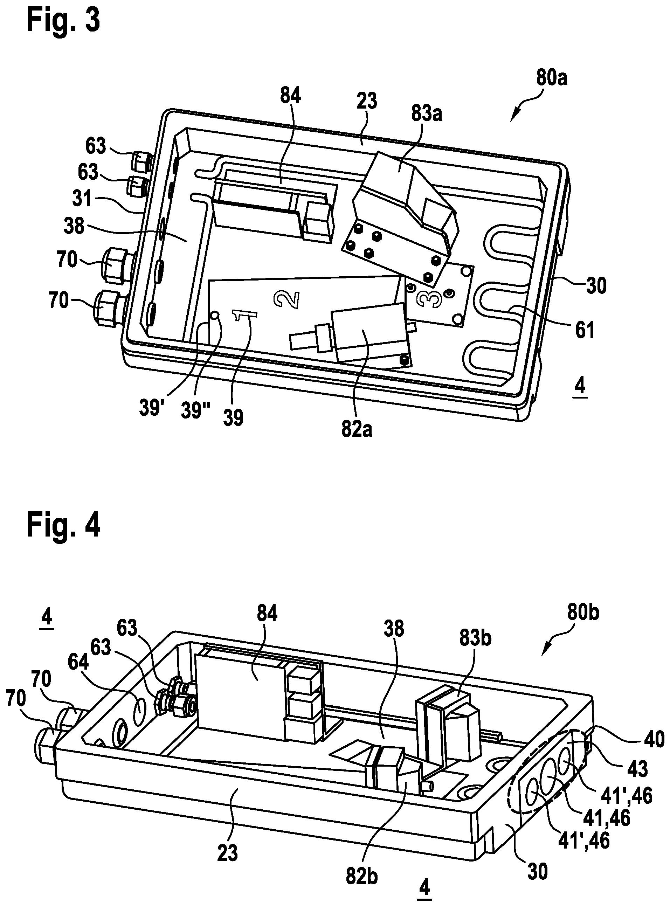

Um eine definierte Mess- ober Prüfaufgabe lösen zu können, müssen die zugehörigen Komponenten 81 vollständig und in einer definierten Lage und Ausrichtung auf dem Komponententräger 83 montiert werden. Zur korrekten und reproduzierbaren Platzierung der Komponenten 81 an den vorgesehenen Orten auf dem Komponententräger 38 weist der Komponententräger 38 eine Codierung 39 (z.B. in Form von Linien 39', Umrissen, Beschriftungen etc. der Komponententrägeroberfläche) auf. Ein Beispiel für eine solche Codierung 39 ist in Figur 3 gezeigt. Die Codierung 39 enthält insbesondere Informationen zum Komponententyp, Lage und Ausrichtung der jeweiligen Komponente 81 etc. für die jeweilige Messaufgabe. Zusätzlich bzw. alternativ kann die Codierung 39 mechanische Elemente wie z.B. Anschläge 39", Noppen, Rasten umfassen, die eine eineindeutige Platzierung und Ausrichtung der Komponenten 81 vereinfachen. Die Codierung 39 gibt somit eine Art Raster vor, durch das sichergestellt wird, dass der Komponententräger 38 nur bestimmte Kombinationen von Komponenten 81 aufnehmen kann und dass jede dieser Komponenten 81 ihren vorgegebenen Platz und die gewünschte Ausrichtung hat. Ein einziger Blick auf den Komponententräger 38 genügt somit, um zu überprüfen, ob alle für eine bestimmte Messaufgabe benötigten Komponenten 81 (Strahlungsquelle, Detektor, Controller, etc.) korrekt montiert wurden und ob ihre Ausrichtung stimmt. Dies vereinfacht Service und Austausch von Komponenten 81 erheblich und ermöglicht eine gute Rekonfigurierbarkeit von optischen Analysevorrichtungen 10 für ein weites Spektrum von Anwendungen.

Der Komponententräger 38 kann auch unterschiedliche Sätze von Codierungen 39 für unterschiedliche Anwendungen enthalten, so dass ein- und derselbe Komponententräger 38 - je nach Anwendung - mit unterschiedlichen Sätzen von Komponenten 81 bestückt werden kann. Im Ausführungsbeispiel der Figur 3 ist der Komponententräger 38 für eine spektrometrische Anwendung im UV-Bereich mit einer Messanordnung 80 bestückt, die eine UV-Strahlungsquelle 82a, ein Gitterspektrometer 83a sowie einen Controller 84 umfasst. Figur 4 zeigt ein Ausführungsbeispiel, beim dem der Komponententräger 38 der Figur 3 eine Minimalbestückung für eine spektrometrische Anwendung im mittleren IR-Bereich aufweist (Messanordnung 80b mit Strahlungsquelle 82b, Spektrometer 83b und Controller 68). Zusätzlich können weitere, in Figuren 3 und 4 nicht gezeigte Komponenten 81 vorhanden sein. Man beachte, dass die in Figuren 3 und 4 gezeigten Messanordnungen 80a, 80a beide vollständig in dem Gehäuse 20 der Figur 2 aufgenommen werden können. Während sich also die Bestückung des Komponententrägers 38 je nach Anwendung ändert, kann für diese verschiedenen Anwendungen immer das gleiche (Universal-) Gehäuse 20 verwendet werden. Die auf dem Komponententräger 38 zu fixierenden Komponenten 81 können dabei beliebig ausgewählt und kombiniert werden, in Abhängigkeit der Anwendung und des für die Messung zu verwendenden Spektralbereichs.

Ein solches Baukastensystem eignet sich übrigens auch für Schulungszwecke: Einem Auszubildenden wird ein codierter Komponententräger 38 sowie ein breiter Satz unterschiedlicher optischer Komponenten 81 zur Verfügung gestellt. Der Auszubildende wählt dann diejenigen Komponenten 81 aus, die aus seiner Sicht für die Lösung einer vorgegebenen Messaufgabe geeignet sind, ordnet diese auf dem Komponententräger 38 an und prüft anschließend die entstandene Messanordnung 80. Auf diese Weise kann der Auszubildende den Aufbau von Spektrometer-Messsystemen für unterschiedliche Anwendungen praxisnah erlernen.

Zur Energieversorgung und zum externen Datenaustausch der im Gehäuse 20, insbesondere auf der Komponententräger 38, angeordneten optischen, elektrischen, elektrooptischen und elektromechanischen Komponenten 81 sind in der Unterschale 23 des Gehäuses 20 elektrische Verbindungselemente 70 zum Anschluss von (in den Figuren nicht dargestellten) Strom- bzw. Signalkabeln vorgesehen. Die Verbindungselemente 70 sind vorzugsweise an einer dem Messobjekt abgewandten Seite, insbesondere einer Rückseite 31, des Gehäuses 20 angeordnet. Signalanschluss und Datenübertragung können insbesondere über Ethernet erfolgen. Dabei können alle gängigen Industrieschnittstellen verwendet werden, beispielweise CAN, Profibus, Modbus etc. Im Inneren 21 des Gehäuses 20 können die Komponenten 81 beispielsweise über Kabel mit Standardschnittstellen (insbesondere USB-Verbindungen) miteinander verbunden bzw. an die Verbindungselemente 70 angeschlossen werden.

Dies ermöglicht eine hohe Flexibilität bei der Konfigurierung der Messanordnung 80 und bei einem Austausch von Einzelkomponenten 81.

Das Gehäuse 20 eignet sich - neben einem Einsatz in einer Laborumgebung - insbesondere für einen Einsatz in einem Prozessumfeld, in der hohe oder tiefe Umgebungstemperaturen sowie starke Temperaturschwankungen vorliegen können. Um die im Gehäuse 20 befindliche Messanordnung 80 gegenüber diesen Umfeldeinflüssen zu schützen bzw. abzuschirmen, umfasst das Gehäuse 20 eine Temperiervorrichtung, die im Folgenden als Kühlvorrichtung 60 beschrieben wird, die aber ebensogut auch eine Wärmevorrichtung sein kann. Die Kühlvorrichtung 60 umfasst eine Kühlleitung 61, die in einem Hohlraum 62 zwischen der Bodenplatte 27 der Gehäuse-Unterschale 23 und dem Komponententräger 38 angeordnet ist (siehe Figur 2) und von einem fluiden Kühlmedium durchströmt wird. Als Kühlmedium kann ein Fluid wie Luft, Wasser oder Öl etc. verwendet werden. Zum Anschluss der Kühlleitung 61 an eine (in den Figuren nicht gezeigte) Kühlmittelversorgung sind - wie in Figuren 1 und 3 dargestellt - im Rahmen 26 der Unterschale 23 zwei Anschlüsse 63 vorgesehen, die sich vorteilhafterweise - ebenso wie die elektrischen Verbindungselemente 70 - auf der dem Messobjekt abgewandten Rückseite 31 des Gehäuses 20 befinden. Da der gesamte unterhalb des Komponententrägers 38 gelegene Hohlraum 62 zur Anordnung von Kühlleitungen 61 genutzt werden kann, kann die Temperierung über eine große Fläche hinweg erfolgen. Die Kühlleitung 61 hat - wie in Figur 3 schematisch angedeutet - einen mäanderförmigen Verlauf, wobei die Anordnung und der gegenseitige Abstand der einzelnen Kühlschleifen im Hohlraum 62 im Prinzip frei konfigurierbar sind und entsprechend der vorherrschenden Arbeitsbedingungen gestaltet werden können. So wird man für Messungen in einer sehr heißen Prozessumgebung eine höhere Dichte von Schleifen der Kühlleitung 61 vorsehen als in einer moderaten Prozessumgebung. Weiterhin wird man die Kühlleitung 61 zweckmäßigerweise in einer solchen Weise ausgelegen, dass Bereiche, in denen verstärkt Prozesswärme auftritt bzw. eindringt, stärker gekühlt werden. Mit Hilfe der Kühlvorrichtung kann also eine von außen in das Gehäuse eingetragene Wärme- bzw. Kälteleistung effektiv abtransportiert werden. Weiterhin dient die Kühlvorrichtung 60 dazu, eine im Betrieb durch die Komponenten 81 auf dem Komponententräger 38 erzeugte Wärmeleistung abzutransportieren. Die Kühlung überträgt sich aufgrund des Formschlusses auch auf den Komponententräger 38 und gewährleistet auf diese Weise eine hohe Temperaturstabilität im Innenraum 21 des Gehäuses 20. Um die Kühlleistung gleichmäßiger zu verteilen, kann zwischen Bodenplatte 27 und Kühlleitung 61 bzw. zwischen Komponententräger 38 und Kühlleitung 61 ein Blech aus einem thermisch gut leitfähigen Material (z.B. Kupfer) eingefügt sein. Weiterhin kann der zwischen Bodenplatte 27, Komponentenplatte 38 und den Außenwänden der Kühlleitung 61 gebildete Hohlraum 62 mit einem thermisch leitfähigen Schüttgut, beispielsweise kleinen Glasperlen, gefüllt werden, um eine gleichmäßigere Wärmeabfuhr zu gewährleisten.

Zusätzlich oder alternativ zu der in Figuren 2 und 3 gezeigten Kühlvorrichtung 60 in der Unterschale 23 des Gehäuses 20 kann auch die Oberschale 22 mit Kühlleitungen versehen sein, die vorzugsweise im Bereich der Haube 25 angeordnet sind. In diesem Fall muss auch die Oberschale 22 Anschlüsse für die Kühlleitungen aufweisen.

Um die Abwärme der Komponenten 81 auf dem Komponententräger 38 während des Betriebs möglichst effektiv abzuleiten und thermische Schwankungen der Messanordnung zu vermeiden, kann der Innenraum 21 des Gehäuses 20 alternativ oder zusätzlich mit einem thermisch leitfähigen Schüttgut, insbesondere kleinen Glasperlen, befüllt werden. Mittels dieses Schüttguts wird die im Innenraum 21 entstehende Wärme an alle berührenden Oberflächen abgeleitet. Zur Befüllung des Innenraums 21 ist auf der Rückseite 31 des Gehäuses 20 eine Öffnung 64 vorgesehen, durch die - nach Montage der Messanordnung 80 auf dem Komponententräger 38 und einer optischen/elektrischen Verbindung der Komponenten 81 - das Schüttgut in den Innenraum 21 eingefüllt wird. Die Öffnung 64 wird anschließend verschlossen, beispielsweise mittels eines in die Öffnung 64 einschraubbaren Deckels. Der Verschluss ist vorteilhafterweise in einer solchen Weise ausgelegt, dass Feuchtigkeit im Gehäuseinnenraum 21 vermieden oder zumindest detektiert wird; hierzu kann ein Trocknungselement und/oder ein Feuchtigkeitsindikator vorgesehen werden.

Neben der verbesserten thermischen Leitfähigkeit hat eine vollständige Befüllung des Innenraums 21 mit einem Schüttgut den zusätzlichen Vorteil, dass die optische Analysevorrichtung 10 in einer konstruktiv einfachen Weise widerstandsfähig gemacht wird für einen Einsatz in einem rauen Produktionsumfeld 5, insbesondere einer explosionsgefährdeten Prozessumgebung. Indem der Hohlraum im Gehäuseinneren 21 mit kleinen Glasperlen gefüllt wird, wird nämlich die Luft aus dem Innenraum 21 verdrängt und somit das Gasvolumen im Gehäuse 20 stark verringert, was die Gefährdung einer Verformung des Gehäuses 20 in einem Explosionsfall reduziert.

Zur Aus- und Einleitung von Messstrahlung in den Gehäuseinnenraum 21 weist das Gehäuse 20 auf der dem Messobjekt zugewandten Vorderseite 30 in dem Ein-/Austrittsbereich 40 drei kreisförmige Durchgangsöffnungen 41, 41' auf, von denen - je nach Anwendungsfall - eine oder mehrere für die Messstrahlung genutzt werden. Die nicht verwendeten Durchgangsöffnungen werden dann nach Bedarf verschlossen, um den Gehäuseinnenraum 21 gegenüber Eindringen von Staub, Strahlung etc. zu schützen.

Wird die optische Analysevorrichtung 10 beispielsweise in einer Laborumgebung verwendet, in der eine Transmissionsmessung des Messmediums durchgeführt werden soll, dann kann unter Verwendung der beiden seitlichen Löcher 41' eine Freistrahloptik realisiert werden, bei der der Messstrahl durch eine der seitlichen Öffnungen 41' aus dem Gehäuse 20 austritt, durch das Messmedium hindurchgeleitet wird und anschließend durch die andere seitliche Öffnung 41' wieder in das Gehäuse 20 zurückgeleitet wird. Andererseits kann die mittlere Öffnung 41 beispielsweise verwendet werden für eine Freistrahloptik für Reflexionsmessungen oder zum Anschließen einer Ulbrichtkugel zur Erzeugung diffuser Strahlung.

Neben der Zu- und Ableitung von Strahlung können die Öffnungen 41, 41' im Ein-/Austrittsbereich 40 auch zur Durchführung elektrischer Leitungen genutzt werden, beispielsweise für Leitungen zum Anschluss von Sensoren, die Prozessgrößen oder Umfeldinformationen des Messmediums erfassen. So kann beispielsweise eine Datenleitung zur Übertragung von Temperatur-Messwerten des Messmediums vorgesehen sein und/oder eine Datenleitung zur Übertragung von Messdaten eines Leckagesensors. Weiterhin können auch Steuerleitungen vorgesehen sein, um Steuersignale zwischen dem Controller 84 im Gehäuseinnenraum 21 und Aktoren im Außenbereich 4 des Gehäuses 20 auszutauschen, z.B. zur Steuerung einer automatisierten Messung des Weißpegels. Solche Daten- bzw. Steuerleitungen müssen im Bereich des Ein-/Austrittsbereichs 40 mit elektrischen Steckern versehen sein, um eine einfache und schnelle Trennung der Datenleitung bei Entnahme der optischen Analysevorrichtung 10 aus dem Prozessumfeld zu ermöglichen. Ganz allgemein stellt der Ein-/Austrittsbereich 40 somit eine optische, elektrische und thermische Schnittstelle zwischen dem Innenraum 21 des Gehäuses und dem das Gehäuse 20 umgebenden Außenbereich 4 dar.

Soll die optische Analysevorrichtung 10 in einem Prozessumfeld eingesetzt werden, so empfiehlt es sich, im Ein-/Austrittsbereich 40 eine mechanische Abdichtung, beispielsweise ein für die verwendete Strahlung transparentes Fenster, vorzusehen, um ein Eindringen von Staub oder Verschmutzungen in den Innenraum 21 des Gehäuses 20 zu vermeiden. Für Messungen in einer Prozessumgebung wird zur Führung der Messstrahlung vorteilhafterweise ein Lichtwellenleiter bzw. ein Lichtleiterbündel verwendet. Als optische Schnittstelle zwischen dem Innenraum 21 des Gehäuses 20 und dem Außenbereich 4 wird dann vorteilhafterweise die mittlere Öffnung 41 verwendet, um Lichtleiter im Gehäuseinneren 21 und/oder Außenraum 4 über eine optische Schnittstelle aneinander anzukoppeln. Hierzu müssen einige apparative Vorkehrungen getroffen werden (Kollimation der Strahlung, Ein-/Auskopplung in Lichtleiterbündel bzw. Einzelfasern, Abschlussfenster, etc.). Um die von außen an das Gehäuse 20 anzubindenden Leitungen (Lichtleiter, elektrische Leitungen etc.) in der mittleren Öffnung 41 zu zentrieren, kann die mittlere Öffnungen 41, wie in Figur 2 angedeutet, mit einem sich nach außen hin öffnenden hohlkegelförmigen Abschnitt 45 versehen sein.

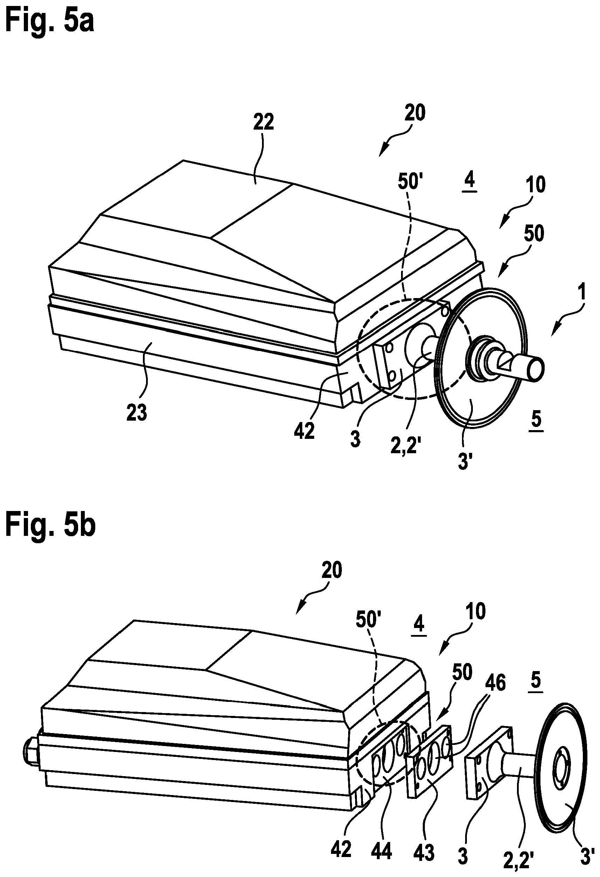

Zur Durchführung reproduzierbarer Messungen muss die optische Analysevorrichtung 10 an einem das Messmedium führenden Behälter bzw. Umgebung (z.B. bei Messungen in einem Prozessumfeld 5 an einem Prozessraum) mechanisch befestigt werden. Im Folgenden wird dies anhand von Figuren 5a und 5b am Beispiel einer optischen Analysevorrichtung 10 erläutert, die zur Untersuchung eines (in Figur 5a und 5b nicht gezeigten) Messmediums mit Hilfe einer Tauchsonde 1 in einem Prozessumfeld 5 zum Einsatz kommen soll. Hierzu wird ein Messstrahl verwendet, der mittels (in den Figuren nicht gezeigten) Lichtleitern zur mittleren Öffnung 41 des Ein-/Austrittsbereichs 40 geführt und von dort im Außenraum 4 des Gehäuses 20 mittels weiterer Lichtleiter zur Tauchsonde 1 geführt wird.

Zum Anschluss des Gehäuses 20 der Analysevorrichtung 10 an die Prozessumgebung wird ein Anschlussbauteil 2 verwendet, das an einer vorgegebenen Messstelle im Prozessumfeld 5 befestigt ist und über eine mechanische Schnittstelle 50 lösbar an einem Verbindungsbereich 50' auf dem Gehäuse 20 befestigt werden kann. Figur 5a zeigt eine perspektivische Darstellung der optischen Analysevorrichtung 10 in Zusammenbaulage mit Anschlussbauteil 2 und Tauchsonde 1, Figur 5b eine Explosionsdarstellung zur Erläuterung der Anbindung des Anschlussbauteils 2 an das Gehäuse 20 der optischen Analysevorrichtung 10.

Zur Verbindung der Tauchsonde 1 am Gehäuse 20 der optischen Analysevorrichtung 10 der Figur 5a hat das Anschlussbauteil 2 die Form eines Doppelflanschs 2' mit zwei Flanschseiten 3, 3'. Mit einer der Flanschseiten 3' ist der Doppelflansch 2' fest oder lösbar an einem (in Figur 5 nicht gezeigten) Bauteil im Prozessumfeld 5 fixiert. Mit der anderen Flanschseite 3 ist er lösbar an dem Verbindungsbereich 50' des Gehäuses 20 befestigt, der sich an der dem Messobjekt zugewandten Vorderseite 30 des Gehäuses 20 befindet. Der Verbindungsbereich 50' überlappt räumlich mit dem den Ein-/Austrittsbereich 40 für die Messstrahlung. Im vorliegenden Ausführungsbeispiel überdeckt der Verbindungsbereich 50' den Ein-/Austrittsbereich 40 für die Messstrahlung, so dass der Messstrahl im mechanischen Verbindungsbereich 50' aus dem Gehäuse 20 aus-/eingeleitet wird. In diesem Ein-/Austrittsbereich 40 weist das Gehäuse 20 - wie oben beschrieben - mehrere Öffnungen 41, 41' auf, die unterschiedliche Konstruktionen zum mechanischen und optischen Anflanschen des Gehäuses 20 an Anschlussbauteile 2 in der Prozessumgebung ermöglichen. Mit Hilfe eines entsprechend gestalteten Doppelflansches 2' (bzw. eines geeignet geformten Anschlussbauteils 2) können - alternativ zu der in Figur 5a gezeigten Tauchsonde 1 - auch andere optische Sonden angeschlossen werden, beispielsweise eine Durchflusszelle, eine Reflexionssonde etc. oder andere Untersuchungsinstrumente zur Durchführung einer Analyse in Feststoffen, Flüssigkeiten oder Gasen. Im Innenraum des Doppelflansches 2' werden Lichtleiter zur Ein-/Ausleitung von Messlicht sowie elektrische Anschlüsse für Sensoren (z.B. Temperatursensor) und/oder Aktoren geführt. Um diesen Anschluss unempfindlich für den Einsatz in einer rauen, insbesondere einer explosionsgefährdeten, Prozessumgebung 5 zu machen, kann ein Innenraum des Doppelflansches 2' mit einer Vergussmasse versehen sein.

Die der optischen Analysevorrichtung 10 zugewandte Flanschseite 3 des Doppelflansch 2' kontaktiert in Einbaulage der optischen Analysevorrichtung 10 im Prozessumfeld 5 eine Außenwand 42 des Gehäuses 20, wodurch - vor allem in einem heißen oder kalten Prozessumfeld 5 - in diesem Bereich die Gefahr unerwünschten Wärme- bzw. Kälteeintrags in das Gehäuse 20 besteht. Um die temperaturempfindlichen optischen Komponenten 81 im Gehäuse 20 der Analysevorrichtung 10 gegenüber solchen thermischen Störungen zu schützen, weist die Gehäuseaußenwand 42 im Verbindungsbereich 50' eine Aussparung 44, beispielsweise eine Ausfräsung mit einer Reduktion der Wanddicke auf, in die ein formstabiles flächiges Isolationselement 43 aus einem thermisch isolierenden Werkstoff (Kunststoff, Keramik etc.) einsetzt ist. Das Isolationselement 43 bewirkt eine thermische Entkopplung des Gehäuses 20 vom Anschlussbauteil 2 und stellt gleichzeitig eine Dichtung dar.

Da der Verbindungsbereich 50' räumlich mit dem Ein-/Austrittsbereich 40 für Strahlung überlappt, überspannt das Isolationselement 43 den Bereich der drei nebeneinanderliegenden Öffnungen 41, 41', die zur Realisierung einer großen Zahl von Messsituationen dienen. Um die für eine bestimmte Messgeometrie benötigten Öffnungen 41, 41' für die Strahlung nutzen zu können, muss die entsprechende Öffnung 46 (bzw. Öffnungen) auch auf dem Isolationselement 43 vorgesehen sein; die weiteren, für die Messgeometrie nicht benötigten Öffnungen 41, 41' können durch das Isolationselement 43 verschlossen sein. Im vorliegenden Ausführungsbeispiel weist das Isolationselement 43 drei Öffnungen 46 auf, die in Zusammenbaulage des Isolationselements 43 mit dem Gehäuse 20 mit den Öffnungen 41, 41' des Ein-/Austrittsbereichs 40 für Strahlung zusammenfallen; die für die Messung mittels Tauchsonde 1 nicht benötigten Öffnungen 41' des Ein-/Austrittsbereichs 40 sind in diesem Fall durch die dem Gehäuse 20 zugewandte Flanschseite 3 des Anschlussbauteils 2 verschlossen.

Zur optischen und elektrischen Verbindung der im Gehäuseinnenraum 21 montierten Messanordnung 80 an die am Anschlussbauteil 2 befestigte Sensorik wird in die Öffnung 41 der Gehäuseunterschale 23 ein geeigneter (in den Figuren nicht gezeigter) Adapter eingesetzt, um die elektrische und optische Kontaktierung im Gehäuseinnenraum 21 zu ermöglichen. Das Anschlussbauteil 2 verfügt über entsprechende Lichtleiter, um eine optische Verbindung zur Sonde (Tauchsonde 1, Durchflusszelle, Küvettenhalter, ...) herzustellen, sowie ggf. über Kabel zur Herstellung einer elektrischen Verbindung.

Zur Trennung des Gehäuses 20 vom Anschlussbauteil 2 bzw. der Kalibriervorrichtung 90 können insbesondere folgende Schritte vorgenommen werden:
1. In einer .Laboranwendung:
   - Anheben des Spektrometers
   - Einsetzen der Analysevorrichtung unter einem vorgegebenem Winkel
   - Verdrehen der Analysevorrichtung bis zum Einrasten des Bajonettverschlusses
   - Ablegen des Spektrometers mit der Analysevorrichtung
   - Herstellen und Prüfung der optischen und elektrischen Verbindungen
2. In einer Prozessanwendung:
   - Vorbereitung des Spektrometers zum Einbau
   - Einsetzen der Analysevorrichtung unter einem vorgegebenem Winkel
   - Verdrehen der Analysevorrichtung bis zum Einrasten des Bajonettverschlusses
   - Herstellen und Prüfung der optischen und elektrischen Verbindungen
   - Sicherung der Verbindung über eine bis vier Schraubverbindungen
   - Einbau des Spektrometers mit der Analysevorrichtung am Analyseort

Zur lösbaren mechanischen Befestigung des Gehäuses 20 an dem Anschlussbauteil 2 weist das Gehäuse 20 im Verbindungsbereich 50' ein Befestigungselement 51 auf, das mit einem Gegenelement 52 des Anschlussbauteils 2 zusammenwirkt, um eine form- und kraftschlüssige lösbare Verbindung zwischen Gehäuse 20 und Anschlussbauteil 2 herzustellen. Durch das Befestigungselement 51 und das Gegenelement 52 wird eine mechanische Schnittstelle 50 geschaffen, die so ausgelegt ist, dass man das Gehäuse 20 in einfacher Weise aus der Messposition im Prozessumfeld 5 entnehmen kann (z.B. um eine Validierung der optischen Analysevorrichtung durchzuführen) und genauso einfach wieder lagegenau im Prozessumfeld 5 montieren kann. Weiterhin kann das Gehäuse 20 mit Hilfe des Befestigungselements 51 in unterschiedlichen Messumgebungen mechanisch fixiert werden, sofern in der jeweiligen Messumgebung ein Gegenelement 52 befestigt ist. Die mechanische Schnittstelle 50 mit den Befestigungsmitteln 51, 52 ist somit universal in dem Sinne, dass sie eine lagegenaue mechanische Fixierung des Gehäuses 20 (und somit der optischen Analysevorrichtung 10) an unterschiedlichen Geräten und Einrichtungen sowohl in einer Labor- als auch in einer Prozessumgebung ermöglicht.

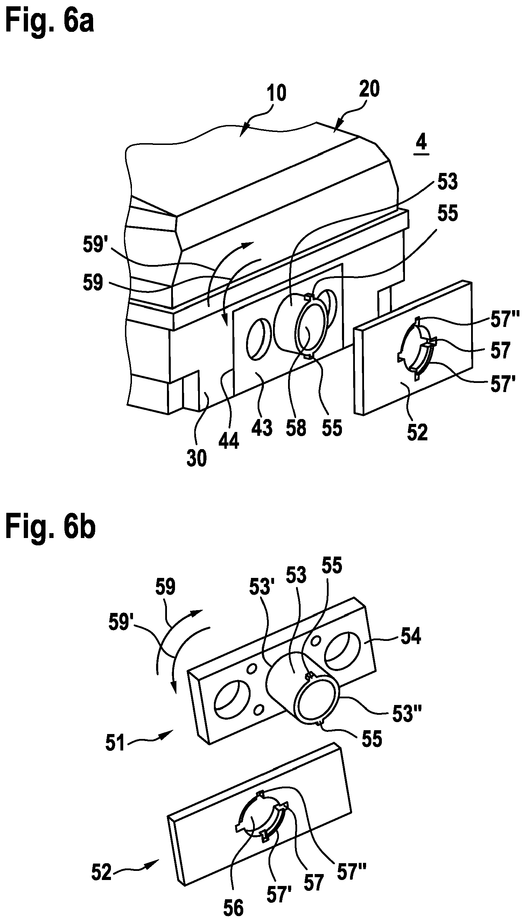

Im Ausführungsbeispiel der Figuren 6a und 6b wird eine Verbindung des Gehäuses 20 an das Anschlussbauteil 2 mittels eines Bajonettverschlusses dargestellt. Figur 6b zeigt eine perspektivische Darstellung eines Befestigungselement 51 mit dazugehörigem Gegenelement 52; Figur 6a zeigt eine Darstellung des Verbindungsbereichs 50' des Gehäuses 20 mit Befestigungselement 51 und Gegenelement 52. Das am Gehäuse 20 zu befestigende Befestigungselement 51 umfasst einen rohrförmigen Abschnitt 53, dessen eines Ende 53' mit einer am Gehäuse 20 zu befestigenden Anschlussplatte 54 versehen ist und dessen gegenüberliegendes Ende 53" zwei nach außen ragende Vorsprünge 55 aufweist. Das an dem Anschlussbauteil 2 zu befestigende Gegenelement 52 hat die Form einer flachen Platte mit einer kreisförmigen Durchgangsöffnung 56; die Durchgangsöffnung 56 ist mit zwei durchgängigen Längsschlitzen 57 versehen, an die sich Querschlitze 57' anschließen. Die Verbindung erfolgt über eine Steck-Dreh-Bewegung: Das Befestigungselement 51 wird um 90 Grad gedreht (Pfeil 59) und mit dem rohrförmigen Abschnitt 53 durch die Durchgangsöffnung 56 des Gegenelements 52 gesteckt. Anschließend wird das Befestigungselement 51 um 90 Grad in Gegenrichtung gedreht (Pfeil 59'). Die Tiefe der Querschlitze 57' variiert in der Ebene senkrecht zur Steckrichtung, weswegen durch die Drehbewegung 59' beide Teile 51, 52 gegeneinandergepresst werden. Einbuchtungen 57" am Ende der Querschlitze 57' wirken als Rasten zur Sicherung der Verbindung. Auf diese Weise kann das optische Analysesystem 10 mit dem im Gehäuse 20 vorgesehenen Befestigungselement 51 durch eine einfache Drehung um 90 Grad an dem (an einer vorgegebenen Stelle im Produktionsumfeld 5 befestigten) Gegenelement 52 fixiert werden und durch eine Gegendrehung um 90 Grad ebenso einfach wieder gelöst werden.

Ein solcher Bajonettverschluss ermöglicht also eine lage- und winkelgenaue lösbare Verbindung zwischen dem Gehäuse 20 und dem Anschlussbauteil 2. Diese Verbindung kann sehr schnell hergestellt werden, in dem das Befestigungselement 51 des Gehäuses 20 in das am Anschlussbauteil 2 befestigte Gegenelement 52 eingeführt und durch eine 90-Grad-Drehung verrastet wird. Bei einem Einsatz der optischen Analysevorrichtung 10 in einem Prozessumfeld kann die Verbindung zwischen Gehäuse 20 und Anschlussbauteil 2 zusätzlich durch Schrauben gesichert werden. Wird die optische Analysevorrichtung 10 in einem Laborumfeld eingesetzt, dann genügt zur Sicherung der Verbindung eine Anordnung auf einer gemeinsamen Unterlage, beispielsweise auf einem Tisch.

Das Befestigungselement 51 kann an der Außenwand 42 der Gehäuseunterschale 23 oder auch an dem Isolationselement 43 befestigt sein. Im Ausführungsbeispiel der Figuren 5a - 6b ist das Befestigungselement 51 in einer solchen Weise gestaltet, dass seine Anschlussplatte 54 im Gehäuseinnenraum 21 befestigt ist und der rohrförmige Abschnitt 53 durch die für den Ein-/Austritt von Strahlung 40 vorgesehene Öffnung 41 nach außen ragt. Der Ein-/Austritt von Strahlung_erfolgt also durch einen Innenraum 58 des rohrförmigen Abschnitts 53. Alternativ kann die Anschlussplatte 54 auch an der Außenwand 42 des Gehäuses 20, insbesondere auch an dem in der Aussparung 44 in der Gehäuseaußenwand 42 vorgesehenen Isolationselement 43, befestigt sein.

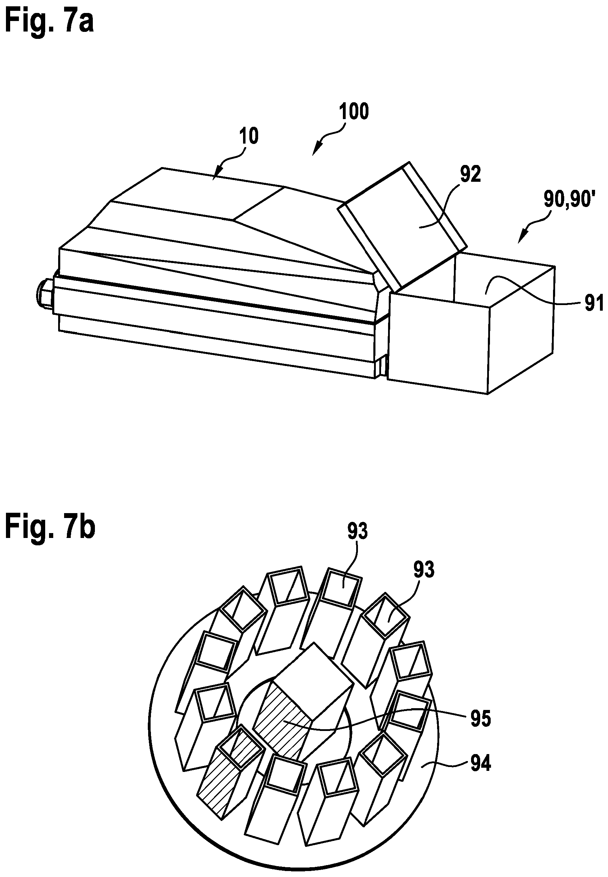

Um reproduzierbare Absolutmessungen zu gewährleisten, ist es notwendig, die optische Analysevorrichtung 10 in regelmäßigen Abständen zu validieren bzw. zu kalibrieren. Dies geschieht mit Hilfe einer Kalibriervorrichtung 90 in einem Laborumfeld. Um eine solche Validierung/Kalibration durchzuführen, wird die optische Analysevorrichtung 10 aus dem Prozessumfeld 5 entnommen und mit der Kalibriervorrichtung 90 verbunden. Dies ist in Figur 7a dargestellt, die eine perspektivische Ansicht der optischen Analysevorrichtung 10 in Zusammenbaulage mit einer beispielsweise als Karussellsystem 90' (auch eine lineare Anordnung ist möglich) ausgestalteten Kalibriervorrichtung 90 mit geöffnetem Deckel 92 zeigt. Die Kalibriervorrichtung kann dabei manuell oder automatisiert sein. Zur Anbindung der Analysevorrichtung 10 an die Kalibriervorrichtung 90 die gleiche lösbare mechanische Schnittstelle 50 verwendet, mit dem die optische Analysevorrichtung 10 vorher im Prozessraum 80 fixiert war. Im vorliegenden Ausführungsbeispiel, bei dem die mechanische Schnittstelle 50 durch einen Bajonettverschluss realisiert wird, ist an der Kalibriervorrichtung 90 ein (in Figur 7a nicht gezeigtes) Gegenelement vorgesehen, welches in Bezug auf seine Funktionalität und Gestaltung mit dem in Figur 6b gezeigten Gegenelement 52 übereinstimmt. Dieses Gegenelement wirkt mit dem Befestigungselement 51 des Gehäuses 10 zusammen, um eine schnelle und reproduzierbare Verbindung zwischen Kalibriervorrichtung 90 und optischer Analysevorrichtung 10 herzustellen. Mit Hilfe dieser Bajonettverbindung lässt sich die optische Analysevorrichtung 10 daher nicht nur schnell und einfach aus dem Prozessumfeld 5 lösen, sondern auch schnell, einfach und reproduzierbar an der Kalibriervorrichtung 90 befestigen.

Die optische Analysevorrichtung 10 und die Kalibriervorrichtung 90 stellen gemeinsam ein Gesamtsystem 100 dar, das einerseits eine Messung eines Messmediums in einem Prozessumfeld 5 ermöglicht, andererseits eine schnelle und einfache Validierung bzw. Kalibrierung der optischen Analysevorrichtung 10 gestattet. Zur Validierung bzw. Kalibrierung wird die Analysevorrichtung 10 über die mechanische Schnittstelle 50 an die Kalibriervorrichtung 90 angeschlossen, die einen mit einem Deckel 92 verschließbaren Probenraum 91 umfasst. Durch die mechanische Schnittstelle 50 kann die optische Analysevorrichtung 10 lagegenau und unverrückbar (mit oder ohne thermische Entkopplung durch ein Isolationselement 43) an der Kalibriervorrichtung 90 gehaltert werden. Die mechanische Schnittstelle 50 stellt dabei sicher, dass die Einzelkomponenten der optischen Analysevorrichtung 10 und der Kalibriervorrichtung 90 in einer definierten Anordnung zueinander sind.

Im Probenraum 91 befinden sich Standardmessobjekte, insbesondere Küvetten 93, anhand derer die Validierung/Kalibrierung durchgeführt wird. Im vorliegenden Beispiel wird ein Karussellsystem 90' mit einer Mehrzahl von Küvetten 93 verwendet, die auf einem Drehteller 94 angeordnet sind. Figur 7b zeigt eine schematische Darstellung eines solchen mit mehreren Proben bestückten Drehtellers 94, in dessen Mitte sich eine optische Spiegelanordnung 95 befindet.

Soll eine Validierung der optischen Analysevorrichtung 10 durchgeführt werden, so wird das Probenkarussell 94 mit einem Satz vorbestimmter Standardküvetten 93 bestückt und in den Innenraum 92 des Karussellsystems 90' eingesetzt. Strahlung aus der optischen Analysevorrichtung 10 wird in die Kalibriervorrichtung 90 geleitet, durchstrahlt eine der Küvetten und wird vom Spiegel 95 zurück in die optische Analysevorrichtung 10 reflektiert. Im Zuge der Validierungsprozesses wird durch Rotation des Drehtellers 94 schrittweise jede der Standardküvetten 93 in eine Messposition gebracht und vermessen. Die Messgeometrie entspricht dabei genau derjenigen, die während der Messungen im Prozessumfeld 5 verwendet wird. Auf diese Weise kann das Analysesystem 10 automatisch validiert werden. Alternativ kann statt des Drehtellers 94 auch ein Küvettenriegel mit einer linearen Anordnung der Standardmessobjekte 93 oder ein Küvettenhalter zur Aufnahme einer einzigen Standardküvette 93 verwendet werden.

Weiterhin kann das Gesamtsystem 100 der Figur 7a auch in einer Laborumgebung verwendet werden, beispielsweise zur Vermessung mehrerer Proben 93 einer gleichartigen Substanz (die evtl. unter unterschiedlichen Bedingungen gewonnen wurden), die in den Drehteller eingesetzt 94 und nacheinander vermessen werden.

Aufgrund der modularen optischen und mechanischen Schnittstellen 40, 50 des Gehäuses 20 eignet sich die beschriebene optische Analysevorrichtung sich zum Einsatz für eine Vielzahl spektraler und photometrischen Methoden in verschiedensten Anwendungsumgebungen im Prozessumfeld und im Labor.

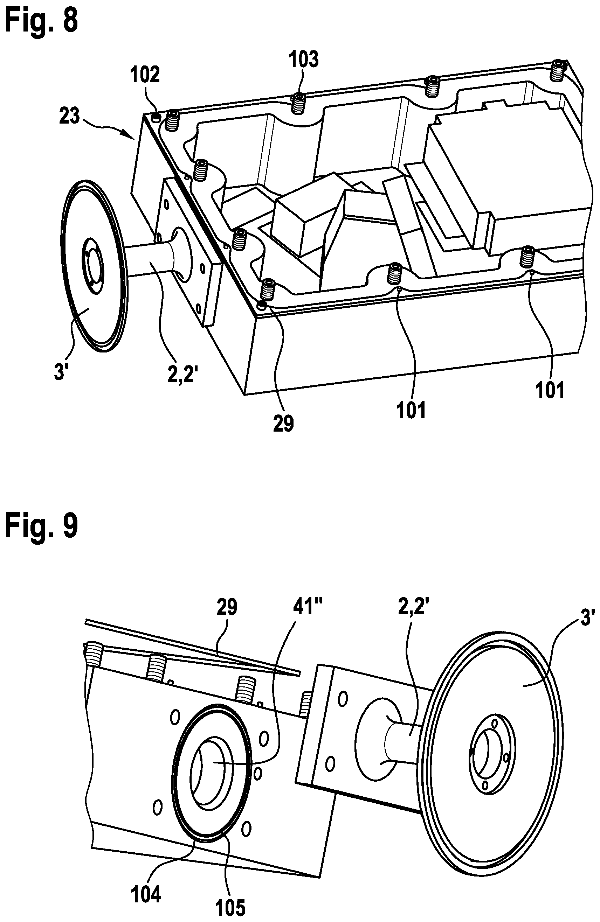

Anhand der in Figur 8 dargestellten Variante der Erfindung wird das Dichtungskonzept der erfindungsgemäßen Analysevorrichtung 20 dargestellt. Gut erkennbar in der Figur ist das Konzept, die Wandungen des Gehäuses, im gezeigten Beispiel der Unterschale 23, mit einer derartigen Dicke auszubilden, dass sich bei einem Zusammenfügen der Unterschale 23 mit der in der Figur nicht dargestellten Oberschale ein Bereich ergibt, in dem Metall auf Metall ruht und der eine Spaltlänge von mindestens 12,5mm aufweist. Auf diese Weise wird sichergestellt, dass auch bei Explosionen im Innenraum kein Flammenaustritt in Richtung des Gehäuseäußeren erfolgt. Weiterhin gezeigt in der Figur sind Durchgangsschrauben 103, mittels welcher die Oberschale mit der Unterschale 23 verschraubt wird. Zu einer weiteren Verbesserung der Dichtigkeit gegenüber Staub, Gasen oder auch Flüssigkeiten ist die Dichtung 29 vorhanden, welche an den Ecken der Unterschale 23 jeweils von einer Sicherungsschraube 102 gegen Verlust gesichert ist. Eine Sicherung der Dichtung 29 gegen seitliches Verschieben erfolgt über die ebenfalls in der Figur erkennbaren Sicherungsstifte 101. Es versteht sich von selbst, dass in der Oberschale neben den Gewindebohrungen für die Durchgangsschrauben 103 Ausnehmungen zur Aufnahme der Schraubenköpfe der Sicherungsschrauben 102 wie auch zur Aufnahme der Sicherungsstifte 101 vorhanden sein müssen, um die Dichtigkeit des Gehäuses sicher zu stellen.

Figur 9 zeigt ein weiteres Detail zum Abdichtungskonzept der erfindungsgemäßen Analysevorrichtung 20. Dabei ist die Öffnung 41" in einem entsprechenden Abstand, der beispielsweise 12,5 mm oder mehr betragen kann, von einer in einer Ringnut 104 angeordneten Dichtung 105 in Form eines O-Ringes umgeben. Damit werden auch in diesem Fall die erforderlichen Spezifikationen an den Explosionsschutz eingehalten.

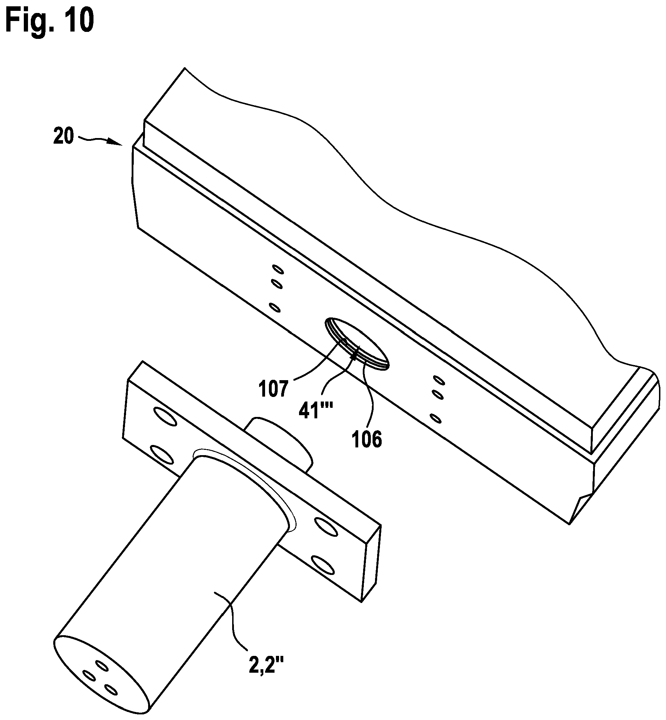

Figur 10 zeigt eine Variante des Dichtungskonzeptes für Fälle, in welchen eine Verbindung zu einem Probenraum über einen in der Figur nicht bezeichneten Stutzen hergestellt wird, welcher in die Öffnung 41‴ eingeführt wird. Im gezeigten Beispiel weist die Öffnung 41‴ an ihrer inneren Umfangseite einen Einstich 107 auf, in welchen eine Dichtung 106, die im gezeigten Beispiel als O-Ring ausgebildet ist, eingesetzt ist.

### Bezugszeichenliste

- 1: Tauchsonde
- 2: Anschlussbauteil, 2' Doppelflansch
- 3, 3': Flanschseite
- 4: Außenbereich, Außenraum
- 5: Prozessraum
- 10: Optische Analysevorrichtung
- 20: Gehäuse
- 21: Innenraum des Gehäuses
- 22: Oberschale
- 23: Unterschale
- 24: Rahmen Oberschale
- 25: Haube
- 26: Rahmen Unterschale
- 27: Bodenplatte
- 28, 28': Kontaktfläche
- 29: Dichtung
- 30: dem Messobjekt zugewandte Vorderseite des Gehäuses 20
- 31: dem Messobjekt abgewandte Rückseite des Gehäuses 20
- 38: Komponententräger
- 39: Codierung 39' Linien 39" Anschlag
- 40: Ein-/Austrittsbereich für Strahlung
- 41, 41',41",41‴: Öffnung für Strahlung
- 42: Außenwand Gehäuse
- 43: Flächiges Isolationselement = Zwischenplatte
- 44: Aussparung
- 45: Hohlkegelförmiger Abschnitt
- 46: Öffnung auf flächigem Isolationselement 43
- 50: Mechanische Schnittstelle
- 50': Verbindungsbereich
- 51: Befestigungselement
- 52: Gegenelement
- 53: rohrförmiger Abschnitt mit Enden 53', 53"
- 54: Anschlussplatte
- 55: Nach außen abragende Vorsprünge
- 56: Durchgangsöffnung im Gegenelement
- 57: Längsschlitze 57' Querschlitze 57" Einbuchtungen
- 58: Innenraum rohrförmiger Abschnitt
- 59: Pfeil Drehbewegung
- 60: Kühlvorrichtung
- 61: Kühlleitung
- 62: Hohlraum zwischen Komponentenplatte und Bodenplatte
- 63: Anschluss für Kühlleitung
- 64: Öffnung auf Gehäuserückseite für Befüllung des Innenraums
- 70: Elektrische Verbindungselemente
- 75: Durchgangslöcher
- 80: Messanordnung
- 81: Komponenten
- 82: Strahlungsquelle
- 83: Detektor 83' Spektrometer
- 84: Controller
- 90: Kalibriervorrichtung
- 90': Karussellsystem
- 91: Probenraum
- 92: Deckel
- 93: Küvette
- 94: Drehteller
- 95: Spiegel
- 100: Gesamtsystem
- 101: Sicherungsstift
- 102: Sicherungsschraube
- 103: Durchgangsschraube
- 104: Ringnut
- 105: Dichtung
- 106: Dichtung
- 107: Einstich

## Patentansprüche

1. Gehäuse (20) zur Aufnahme von Komponenten (81, 82, 83, 84) einer Messanordnung (80) zur optischen Bestimmung mindestens einer Kenngröße eines Mediums, wobei das Gehäuse (20) einen Komponententräger (38) zur Befestigung der Komponenten (81, 82, 83, 84) und mindestens einen Ein-/Austrittsbereich (40) zum Ein- und/oder Austritt optischer Strahlung umfasst, wobei das Gehäuse (20) eine mechanische Schnittstelle (50) zur lagegenauen lösbaren Befestigung des Gehäuses (20) an einem Einsatzort, insbesondere an einer Außenwand (81) eines Prozessraums (80), aufweist
**dadurch gekennzeichnet, dass**
das Gehäuse (20) mindestens zweiteilig ausgestaltet ist und eine Oberschale (22) und eine Unterschale (23) umfasst und zwischen der Oberschale (22) und der Unterschale (23) eine Dichtung (29) vorgesehen ist, wobei die Dichtung (29) mittels Sicherungsschrauben (102) gegen Verlust gesichert ist.

2. Gehäuse (20) nach Anspruch 1,
**dadurch gekennzeichnet, dass**
die mechanische Schnittstelle (50) Befestigungsmittel (51, 52) umfasst, von denen zumindest eines (51) in einem Verbindungsbereich (50') des Gehäuses (20) befestigt ist.

3. Gehäuse (20) nach Anspruch 1 oder 2,
**dadurch gekennzeichnet, dass**
die mechanische Schnittstelle (50) durch einen Bajonettverschluss gebildet ist.

4. Gehäuse (20) nach einem der vorangehenden Ansprüche,
**dadurch gekennzeichnet, dass**
der Verbindungsbereich (50') und der Ein-/Austrittsbereich (40) für optische Strahlung räumlich überlappen.

5. Gehäuse (20) nach einem der vorangehenden Ansprüche,
**dadurch gekennzeichnet, dass**
der Komponententräger (38) in einem geschlossenen Innenraum (21) des Gehäuses (20) befestigt ist.

6. Gehäuse (20) nach einem der vorangehenden Ansprüche,
**dadurch gekennzeichnet, dass**
die Dichtung (29) mittels Sicherungsstiften (101) gegen Verrutschen gesichert ist.

7. Gehäuse (20) nach einem der vorangehenden Ansprüche,
**dadurch gekennzeichnet, dass**
das Gehäuse (20) eine Kühlvorrichtung (60) umfasst.

8. Gehäuse (20) nach Anspruch 7,
**dadurch gekennzeichnet, dass**
die Kühlvorrichtung (60) in einem zwischen dem Komponententräger (38) und einer Bodenplatte (27) des Gehäuses (20) gebildeten Hohlraum (62) im Innenraum (21) des Gehäuses (20) angeordnet ist.

9. Gehäuse (20) nach Anspruch 7 oder 8,
**dadurch gekennzeichnet, dass**
die Kühlvorrichtung (60) eine von einem Kühlmedium durchströmbare Kühlleitung (61) umfasst.

10. Gehäuse (20) nach einem der Ansprüche 7 bis 9,
**dadurch gekennzeichnet, dass**
die Kühlvorrichtung (60) derart ausgeführt ist, dass ein Kühlmedium zunächst mindestens eine der Komponenten (81, 82, 83, 84) und nachfolgend den Ein-/Austrittsbereich für den Ein-/Austritt optischer Strahlung erreicht.

11. Gehäuse (20) nach einem der vorangehenden Ansprüche,
**dadurch gekennzeichnet, dass**
der Komponententräger (38) eine Codierung (39) zur lage- und/oder winkelgenauen Positionierung von darauf anzuordnenden Komponenten (81, 82, 83, 84) aufweist.

## Claims

1. Housing (20) for receiving components (81, 82, 83, 84) of a measuring arrangement (80) for optical determination of at least one characteristic of a medium, wherein the housing (20) comprises a component carrier (38) for the fastening of the components (81, 82, 83, 84) and at least one inlet/outlet region (40) for the entry and/or exit of optical radiation, wherein the housing (20) has a mechanical interface (50) for the positionally precise and releasable fastening of the housing (20) at a place of use, in particular on an outer wall (81) of a process space (80),
**characterized in that**
the housing (20) is designed in at least two parts and comprises an upper shell (22) and a lower shell (23), and a seal (29) is provided between the upper shell (22) and the lower shell (23), the seal (29) being secured against loss by means of locking screws (102).

2. Housing (20) according to Claim 1,
**characterized in that**
the mechanical interface (50) comprises fastening means (51, 52), of which at least one (51) is fastened in a connection region (50') of the housing (20).

3. Housing (20) according to Claim 1 or 2,
**characterized in that**
the mechanical interface (50) is formed by a bayonet lock.

4. Housing (20) according to one of the preceding claims,
**characterized in that**
the connection region (50') and the inlet/outlet region (40) for optical radiation spatially overlap.

5. Housing (20) according to one of the preceding claims,
**characterized in that**
the component carrier (38) is fastened in a closed interior (21) of the housing (20).

6. Housing (20) according to one of the preceding claims,
**characterized in that**
the seal (29) is secured against slipping by means of locking pins (101).

7. Housing (20) according to one of the preceding claims,
**characterized in that**
the housing (20) comprises a cooling device (60).

8. Housing (20) according to Claim 7,
**characterized in that**
the cooling device (60) is arranged in a cavity (62) in the interior (21) of the housing (20), the cavity being formed between the component carrier (38) and a base plate (27) of the housing (20).

9. Housing (20) according to Claim 7 or 8,
**characterized in that**
the cooling device (60) comprises a cooling line (61) through which a cooling medium can flow.

10. Housing (20) according to one of Claims 7 to 9,
**characterized in that**
the cooling device (60) is designed in such a way that a cooling medium first reaches at least one of the components (81, 82, 83, 84) and subsequently reaches the inlet/outlet region for the entry/exit of optical radiation.

11. Housing (20) according to one of the preceding claims,
**characterized in that**
the component carrier (38) has a coding (39) for the positionally and/or angularly precise positioning of components (81, 82, 83, 84) that are to be arranged thereon.

## Revendications

1. Boîtier (20) destiné à recevoir des composants (81, 82, 83, 84) d'un ensemble de mesure (80) destiné à déterminer visuellement au moins un paramètre caractéristique d'un milieu, le boîtier (20) comprenant un support de composant (38) destiné à fixer les composants (81, 82, 83, 84) et au moins une zone d'entrée/sortie (40) pour l'entrée et/ou la sortie d'un rayonnement optique, le boîtier (20) comportant une interface mécanique (50) destinée à fixer de manière amovible et avec une précision de position le boîtier (20) sur un emplacement d'utilisation, en particulier sur un mur extérieur (81) d'un local de traitement (80),
**caractérisé en ce que**
le boîtier (20) est configuré au moins en deux parties et comprend une coque supérieure (22) et une coque inférieure (23) et un joint d'étanchéité (29) est prévu entre la coque supérieure (22) et la coque inférieure (23), le joint d'étanchéité (29) étant bloqué pour éviter toute perte au moyen de vis de blocage (102).

2. Boîtier(20) selon la revendication 1,
**caractérisé en ce que**
l'interface mécanique (50) comprend des moyens de fixation (51, 52), dont au moins un (51) est fixé dans une zone de liaison (50') du boîtier (20).

3. Boîtier (20) selon la revendication 1 ou 2,
**caractérisé en ce que**
l'interface mécanique (50) est formée par une fermeture à baïonnette.

4. Boîtier (20) selon l'une des revendications précédentes,
**caractérisé en ce que**
la zone de liaison (50') et la zone d'entrée/sortie (40) pour le rayonnement optique se chevauchent spatialement.

5. Boîtier (20) selon l'une des revendications précédentes,
**caractérisé en ce que**
le support de composant (38) est fixé dans un espace intérieur fermé (21) du boîtier (20).

6. Boîtier (20) selon l'une des revendications précédentes,
**caractérisé en ce que**
le joint d'étanchéité (29) est bloqué pour éviter tout glissement au moyen de goupilles de blocage (101).

7. Boîtier (20) selon l'une des revendications précédentes,
**caractérisé en ce que**
le boîtier (20) comprend un dispositif de refroidissement (60).

8. Boîtier(20) selon la revendication 7,
**caractérisé en ce que**
le dispositif de refroidissement (60) est disposé dans une cavité (62) formée entre le support de composant (38) et une plaque de fond (27) du boîtier (20) dans l'espace intérieur (21) du boîtier (20).

9. Boîtier (20) selon la revendication 7 ou 8,
**caractérisé en ce que**
le dispositif de refroidissement (60) comprend une conduite de refroidissement (61) pouvant être traversée par un fluide de refroidissement.

10. Boîtier (20) selon l'une des revendications 7 à 9,
**caractérisé en ce que**
le dispositif de refroidissement (60) est réalisé de telle manière qu'un fluide de refroidissement atteint d'abord au moins un des composants (81, 82, 83, 84), puis la zone d'entrée/sortie d'un rayonnement optique.

11. Boîtier (20) selon l'une des revendications précédentes,
**caractérisé en ce que**
le support de composant (38) comporte un codage (39) pour le positionnement avec une précision de position/ou d'angle des composants (81, 82, 83, 84) devant être disposés dessus.
